Europäisches Patentamt

European Patent Office

Office européen des brevets

(11) Veröffentlichungsnummer: **0 547 263 B1**

(12) **EUROPÄISCHE PATENTSCHRIFT**

(45) Veröffentlichungstag der Patentschrift: **06.09.95**

(51) Int. Cl.[6]: **C03C 3/078**, C03C 3/089

(21) Anmeldenummer: **91121730.5**

(22) Anmeldetag: **18.12.91**

(54) **Bleifreies Zinksilikat-Kristallglas und dessen Verwendung.**

(43) Veröffentlichungstag der Anmeldung:
**23.06.93 Patentblatt 93/25**

(45) Bekanntmachung des Hinweises auf die
Patenterteilung:
**06.09.95 Patentblatt 95/36**

(84) Benannte Vertragsstaaten:
**AT BE CH DE DK ES FR GB GR IT LI LU NL SE**

(56) Entgegenhaltungen:
**EP-A- 0 151 346**
**GB-A- 2 115 403**
**US-A- 4 012 131**

(73) Patentinhaber: **INN CRYSTAL GLASS GmbH**
**Industriezeile 24**
**A-5280 Braunau/Inn (AT)**

(72) Erfinder: **Sasek, Ladislav, Prof. DrSc.**
**Dipl.-Ing.**
**U Petrin 1858/3**
**Prag 6 (CS)**
Erfinder: **Rada, Miroslav, Dipl.Ing. PhD.**
**Lamacova 839**
**Prag 5 (CS)**

(74) Vertreter: **TER MEER - MÜLLER - STEINMEI-**
**STER & PARTNER**
**Mauerkircherstrasse 45**
**D-81679 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

EP 0 547 263 B1

**Beschreibung**

Gegenstand der Erfindung ist ein bleifreies Zinksilikat-Kristallglas und dessen Verwendung zur Herstellung von Haushalts- und Tafelglaswaren.

Für die Herstellung qualitativ hochwertiger Haushaltsglaswaren, wie Tafelgläsern, wird im allgemeinen Bleikristallglas verwendet, welches einen Gehalt von mindestens 30% PbO und eine Dichte von 3,0 aufweisen muß. Es sind auch Kristallgläser mit niedrigerem Bleigehalt bekannt, welche $K_2O$, PbO, BaO und ZnO Mengen von allein oder zusammen mindestens 10% enthalten und eine Dichte von mindestens 2,45 und einen Brechungsindex von mindestens 1,52 besitzen.

Es besteht nun ein Bedürfnis dafür, ein Kristallglas zu schaffen, welches für die Herstellung von Haushaltsglaswaren und namentlich Tafelglaswaren verwendet werden kann und einen geringeren oder keinen Gehalt an Blei aufweist und dennoch die notwendigen Eigenschaften für dieses Einsatzgebiet aufweist.

Die Anforderungen an Kristallgläser für die Herstellung von Haushaltsglaswaren und insbesondere Tafelglaswaren sind sehr hoch. Solche Gläser müssen eine hohe chemische Widerstandsfähigkeit aufweisen und mindestens der unteren Hälfte der dritten hydrolytischen Klasse nach ISO 719-1985 und DIN 51031 und 51032 entsprechen. Weiterhin müssen sie einen Brechungsindex von mehr als 1,52 besitzen. Die Schmelztemperatur sollte im Hinblick auf die Verarbeitbarkeit des Glases nicht viel höher liegen als die eines herkömmlichen Bleikristallglases. Der Verlauf der Viskosität in Abhängigkeit von der Temperatur soll von dem des Bleikristallglases nicht wesentlich abweichen. Eine größere Steilheit der Viskositätskurve wäre dabei erwünscht. Die Liquidustemperatur (Kristallisationstemperatur) sollte mindestens 80°C unterhalb der Temperatur liegen, die dem Viskositätspunkt $\log\eta$ = 4(dPa.s) entspricht, was sowohl für die Oberflächen, als auch für die Volumenkristallisation des Glases zutreffen sollte. Der Verlauf der Abhängigkeit des spezifischen elektrischen Widerstandes pel. von der Temperatur sollte ebenfalls dem Verlauf der Charakteristik des Bleikristallglases ähnlich sein. Es wäre wünschenswert, wenn die Charakteristik höher läge als die eines Bleikristallglases, weil sich hierdurch eine optimalere Ausnutzung der Schmelzöfen erreichen ließe. Weiterhin muß die Läuterungsfähigkeit des Glases ebenso gut sein wie die eines Bleikristallglases.

Die Aufgabe der vorliegenden Erfindung besteht nun darin, ein Kristallglas anzugeben, welches für die Herstellung von Haushaltsglaswaren und Tafelglaswaren geeignet ist und die oben angesprochenen Eigenschaften besitzt, namentlich jene eines Bleiglases oder Bleikristallglases, jedoch kein Blei enthält.

Diese Aufgabe wird nun gelöst durch das bleifreie Zinksilikat-Kristallglas gemäß Hauptanspruch. Die Unteransprüche betreffen bevorzugte Ausführungsformen dieses Erfindungsgegenstandes sowie die Verwendung des erfindungsgemäßen Glases zur Herstellung von Haushalts- und Tafelglaswaren.

Gegenstand der Erfindung ist daher ein bleifreies Zinksilikat-Kristallglas mit einem Brechungsindex von ≥ 1,52 und einer Zusammensetzung in Gew.-% auf Oxidbasis von

65,0-70,0 $SiO_2$
6,0-9,0 CaO
4,0-12,0 $K_2O$
4,0-12,0 $Na_2O$
0,5-5,0 $B_2O_3$
4,0-7,0 ZnO
0,1-1,0 $Sb_2O_3$ sowie
1,0-6,0 $ZrO_2$ und/oder $TiO_2$

mit der Maßgabe, daß die Summe der Oxidbestandteile 100 Gew.-% beträgt.

Gemäß einer bevorzugten Ausführungsform der Erfindung besitzt das bleifreie Zinksilikat-Kristallglas eine Zusammensetzung in Gew.-% auf Oxidbasis von

67,0-69,0 $SiO_2$
6,0-9,0 CaO
5,0-8,0 $K_2O$
5,0-8,0 $Na_2O$
1,5-2,0 $ZrO_2$
0,5-2,0 $B_2O_3$
5,0-6,5 ZnO
0,2-0,7 $Sb_2O_3$ sowie
1,0-3,0 $ZrO_2$ und/oder $TiO_2$.

Neben den Oxidbestandteilen kann das erfindungsgemäße Glas noch unvermeidbare Verunreinigungen enthalten, beispielsweise Stickstoffoxide aus dem als Ausgangsmaterial verwendeten Kaliumnitrat.

2

Das erfindungsgemäße Zinksilikat-Kristallglas enthält 65,0 bis 70,0, bevorzugter 67,0 bis 69,0 Gew.-% Siliciumdioxid ($SiO_2$), welches bei der Herstellung des erfindungsgemäßen Zinksilikat-Kristallglases vorzugsweise in Form von Quarzsand eingesetzt wird.

Calciumoxid (CaO) ist in einer Menge von 6,0 bis 9,0 Gew.-% enthalten und wird bei der Herstellung des Glases vorzugsweise in Form von Kalk zugesetzt.

Kaliumoxid ($K_2O$) und Natriumoxid ($Na_2O$) sind in Mengen von 4,0 bis 12,0 Gew.-%, bevorzugter in Mengen von 5,0 bis 8,0 Gew.-% in dem erfindungsgemäßen Zinksilikat-Kristallglas enthalten. Sie werden bei der Herstellung vorzugsweise in Form von Pottasche beziehungsweise Soda zugeführt.

Boroxid ($B_2O_3$) ist in dem erfindungsgemäßen Kristallglas in einer Menge von 0,5 bis 5,0, bevorzugter in einer Menge von 0,5 bis 2,0 Gew.-% enthalten. $B_2O_3$ wird bei der Herstellung des Kristallglases vorzugsweise in Form von Borax zugegeben.

Wesentlicher Bestandteil des erfindungsgemäßen Kristallglases ist Zinkoxid (ZnO), welches in einer Menge von 4,0 bis 7,0 Gew.-%, bevorzugter in einer Menge von 5,0 bis 6,5 Gew.-% enthalten ist. Zinkoxid verursacht die vorteilhaften Eigenschaften des erfindungsgemäßen Kristallglases, indem es den Wärmeausdehnungskoeffizienten herabsetzt, die chemische Beständigkeit erhöht. die Lichtbrechung steigert, die Ritzfärte erhöht, die Zug- und Druckfestigkeit nicht beeinflußt, jedoch die Wärmeleitfähigkeit verbessert, die Haarrißbildung verringert und Schmelze und Läuterung günstig beeinflußt. Da bei ZnO-Gehalten oberhalb 8% Zinksilikat-Entglasungen auftreten können, ist dieser Bestandteil in den oben angegebenen Mengen in dem erfindungsgemäßen Kristallglas enthalten.

Antimonoxid ($Sb_2O_3$) ist in dem erfindungsgemäßen Zinksilikat-Kristallglas als Läuterungsmittel in einer Menge von 0,1 bis 1,0 Gew.-%, bevorzugter in einer Menge von 0,2 bis 0,7 und bevorzugter in einer Menge von 0.1 bis 0,5 Gew.-% enthalten.

Als weiteren Bestandteil enthält das erfindungsgemäße Zinksilikat-Kristallglas 1,0 bis 6,0 Gew.-%, bevorzugter 1,0 bis 3,0 Gew.-% Zirkoniumoxid ($ZrO_2$) und/oder Titanoxid ($TiO_2$). Gemäß einer weiter bevorzugten Ausführungsform der Erfindung enthält das Zinksilikat-Kristallglas entweder $ZrO_2$ oder $TiO_2$ in den angegebenen Mengen, $ZrO_2$ kann im Glas bis zu 40% $SiO_2$ ersetzen, jedoch verschlechtert sich mit steigendem $ZrO_2$-Gehalt die Einschmelzbarkeit, so daß dieser Bestandteil in der angegebenen Menge von 1,0 bis 6,0 Gew.-%, bevorzugter von 1,0 bis 3,0 Gew.-% vorhanden ist. $ZrO_2$ verbessert weiterhin die chemische Beständigkeit und erniedrigt den Längenausdehnungskoeffizienten, erhöht jedoch die Erweichungs- und Entspannungstemperatur. Dieses Material wird entweder in Form von Zirkoniumoxid oder bevorzugter in Form von Zirkoniumsilikat eingesetzt. Im Vergleich zu $TiO_2$ ist $ZrO_2$ oxidations- und reduktionsfest, so daß für Anwendungsgebiete, in denen diese Eigenschaft von Bedeutung ist, das erfindungsgemäße Zinksiliakt-Kristallglas vorzugsweise kein $TiO_2$ enthält.

Besonders bevorzugte erfindungsgemäße bleifreie Zinksilikat-Kristallgläser besitzen die folgende Zusammensetzung in Gew.-% auf Oxidbasis:

68,35 $SiO_2$

6,72 CaO

7,11 $K_2O$

9,06 $Na_2O$

1,34 $ZrO_2$ und/oder $TiO_2$

1,01 $B_2O_3$

6,07 ZnO

0,34 $Sb_2O_3$.

Das erfindungsgemäße bleifreie Zinksilikat-Kristallglas, namentlich die oben angegebenen bevorzugten Ausführungsform besitzen vorteilhafte Eigenschaften, wie eine hohe chemische Widerstandsfähigkeit, namentlich einer Hydrolysebeständigkeit gegen Chlorwasserstoffsäure, einem Brechungsindex im Bereich von 1,5215 bis 1,5320, einen spezifischen Widerstand von 4,767 bis 6,364 Ω • cm, gute Viskositätseigenschaften, einer Kristallisationstemperatur im Bereich von 865 bis 972 °C und zeigen keine oder nur eine geringe Oberflächenkristallisation.

Zur Herstellung werden die als Ausgangsmaterialien eingesetzten Oxidlieferanten in der üblichen Weise aufgeschmolzen und das Glas namentlich durch Zusatz von $Sb_2O_3$ geläutert. Weiterhin ist es möglich, zusätzliche Läuterungsmittel zu verwenden und beispielsweise $As_2O_3$ in geringen Mengen zuzugeben.

Weiterhin ist es möglich, dem erfindungsgemäßen Zinksilikat-Kristallglas Aluminiumoxid ($Al_2O_3$) in Mengen von 1 bis 5 Gew.-% zuzusetzen. $Al_2O_3$ wird vorzugsweise als Tonerdehydrat eingebracht und reduziert bei hohem Alkaligehalt und niedrigem CaO-Gehalt die Kristallisation deutlich. Gleichzeitig läßt sich der spezifische Widerstand um bis zu 5% erniedrigen. Schließlich läßt sich bei alkalischen Gläsern durch den Zusatz von $Al_2O_3$ die Säure-, Laugen- und Wasserbeständigkeit erhöhen und gleichzeitig sinkt bei steigendem Gehalt an diesem Bestandteil die Dichte.

Das erfindungsgemäße bleifreie Zinksilikat-Kristallglas eignet sich hervorragend zur Herstellung von Haushaltsglaswaren, insbesondere von Tafelwaren, wie Trinkgläser, Kerzenleuchter, Vasen, Aschenbecher, etc., weil es neben einer hohen Festigkeit und Hydrolyseunempfindlichkeit und einen hohen Brechungsindex aufweist.

Die folgenden Beispiele dienen der weiteren Erläuterung der Erfindung.

**Beispiele**

Zur Herstellung des erfindungsgemäßen bleifreien Zinksilikat-Kristallglases verwendet man die üblichen Methoden und Vorrichtungen für die Glasherstellung, die dem Fachmann bekannt sind.

Durch Aufschmelzen der Oxidlieferanten Quarzsand, Zirkoniumsilikat, Kalk, Soda, Pottasche, kristallines Borax, Zinkoxid und Antimonoxid beziehungsweise Titanoxid anstelle von Zirkoniumsilikat bildet man die in der nachfolgenden Tabelle aufgeführten bleifreien Zinksilikat-Kristallgläser. Zu Vergleichszwecken ist als Vergleichsbeispiel ein Bleikristallglas üblicher Zusammensetzung mit aufgeführt.

**Tabelle 1**

Chemische Zusammensetzung der ZnO Gläser in Gew.-%

| Oxide | Beispiel | | | | | | | | | | Vergleichsbeispiel |
|---|---|---|---|---|---|---|---|---|---|---|---|
| | 1 | 2 | 3 | 4 | 5 | 6 | 7 | 8 | 9 | 10 | |
| $SiO_2$ | 67,841 | 68,614 | 68,726 | 68,465 | 68,432 | 68,154 | 68,408 | 68,140 | 68,350 | 64,690 | 59,41 |
| $ZrO_2$ | 1,342 | 1,359 | 1,359 | 1,354 | 1,353 | 1,348 | 1,353 | 1,348 | 0 | 0 | 0 |
| $CaO$ | 7,487 | 6,438 | 7,585 | 6,047 | 6,421 | 6,019 | 7,173 | 6,769 | 6,72 | 6,72 | BaO 0,62 |
| $Na_2O$ | 9,278 | 9,385 | 9,956 | 9,368 | 9,579 | 9,328 | 8,349 | 9,103 | 7,11 | 7,11 | 4,81 |
| $K_2O$ | 6,071 | 6,141 | 4,784 | 6,720 | 7,170 | 7,141 | 7,167 | 7,120 | 9,06 | 9,45 | 9,04 |
| $B_2O_3$ | 1,468 | 1,485 | 0,991 | 1,482 | 1,481 | 1,475 | 0,984 | 0,983 | 1,01 | 0,69 | 0,52 |
| $ZnO$ | 6,037 | 6,107 | 6,116 | 6,094 | 6,091 | 6,066 | 6,088 | 6,064 | 6,07 | 5,00 | - |
| $Sb_2O_3$ | 0,333 | 0,337 | 0,338 | 0,336 | 0,336 | 0,335 | 0,336 | 0,335 | 0,34 | 0,34 | 0,05 |
| $TiO_2$ | 0 | 0 | 0 | 0 | 0 | 0 | 0 | 0 | 1,34 | 6,00 | |
| $PbO$ | 0 | 0 | 0 | 0 | 0 | 0 | 0 | 0 | 0 | 0 | 25,37 |
| $NO_2{}^x$ | 1,532 | 1,532 | 1,532 | 1,238 | 1,238 | 1,238 | 1,238 | | | | $As_2O_3$ 0,18 |

In der nachfolgenden Tabelle 2 sind die Eigenschaften der verschmolzenen erfindungsgemäßen bleifreien Zinksilikat-Kristallgläser und des Vergleichs-Bleikristallglases aufgeführt.

**Tabelle 2**

**Eigenschaften der Gläser**

| Eigenschaften | Beispiel | | | | | | | | | | Vergleichs-beispiel |
|---|---|---|---|---|---|---|---|---|---|---|---|
| | 1 | 2 | 3 | 4 | 5 | 6 | 7 | 8 | 9 | 10 | |
| Hydrolysebeständigkeit in ml 0-0,01 mol/l HCl | 0,24 | 0,26 | | | 0,31 | 0,345 | | 0,34 | | | |
| Brechungsindex | 1,5230 | 1,5215 | | | 1,5335 | 1,5280 | | 1,5240 | | | > 1,545 |
| Läuterungsversuche Blasenzahl/100 g Glas | 595 | 498 | | | 597 | 455 | | | | | |
| Spezi. Widerstand [Ωcm] pel beim log h = 2 | 6,031 | 6,123 | | | 6,364 | 5,958 | | 4,767 | | | 5,517 |
| pel 1450°C | 5,372 | 5,742 | | | 6,018 | 5,434 | | 4,357 | | | 5,091 |
| Temperaturen bei Viskositäten log η=2 | 1416 | 1430 | | | 1434 | 1423 | | 1422 | | | 1423 |
| log η=3 | 1169 | 1182 | | | 1183 | 1169 | | 1160 | | | |
| log η=4 | 1017 | 1029 | | | 1027 | 1012 | | 999 | | | |
| log η=7,6 | 732 | 742 | | | 737 | 721 | | 702 | | | |
| log η=13 | 543 | 551 | | | 545 | 528 | | 507 | | | |
| log η=14,5 | 509 | 517 | | | 511 | 494 | | 473 | | | 395 |
| Kristallisationstemper. | 950 | 896 | 972 | 845 | 894 | 865 | 932 | 873 | | | 848 |
| Liquidustemperatur °C Oberflächenkristallisation | reichlich | häufig schon nach 2 Stunden | weniger reichlich als beim Glas 2 | gleich wie bei Beispiel 3 | erst nach 15 Stunden besser als frühere Gläser. Gleich nach dem PbO Glas | besser als bei Beispiel 5 oder PbO Glas | besser als bei Beispiel 6 | keine Oberflächenkristallisation nach 24 Stunden | | | |

Wie aus den obigen Tabellen ersichtlich ist, besitzen die erfindungsgemäßen bleifreien Zinksilikat-Kristallgläser ausgezeichnete Eigenschaften, welche sie für das angestrebte Einsatzgebiet hervorragend geeignet machen.

**Patentansprüche**

1. Bleifreies Zinksilikat-Kristallglas mit einem Brechungsindex von ≥ 1,52 und einer Zusammensetzung in Gew.-% auf Oxidbasis von
65,0-70,0 SiO$_2$

6

6,0-9,0 CaO
4,0-12,0 $K_2O$
4,0-12,0 $Na_2O$
0,5-5,0 $B_2O_3$
4,0-7,0 ZnO
0,1-1,0 $Sb_2O_3$ sowie
1,0-6,0 $ZrO_2$ und/oder $TiO_2$

mit der Maßgabe, daß die Summe der Oxidbestandteile 100 Gew.-% beträgt.

2. Bleifreies Zinksilikat-Kristallglas nach Anspruch 1, **gekennzeichnet durch** folgende Zusammensetzung in Gew.-% auf Oxidbasis
    67,0-69,0 $SiO_2$
    6,0-9,0 CaO
    5,0-8,0 $K_2O$
    5,0-8,0 $Na_2O$
    1,5-2,0 $ZrO_2$ 0,5-2,0 $B_2O_3$
    5,0-6,5 ZnO
    0,2-0,7 $Sb_2O_3$ sowie
    1,0-3,0 $ZrO_2$ und/oder TiO2.

3. Bleifreies Zinksilikat-Kristallglas nach Anspruch 1**, gekennzeichnet durch** folgende Zusammensetzung in Gew.-% auf Oxidbasis
    68,35 $SiO_2$
    6,72 CaO
    7.11 $K_2O$
    9,06 $Na_2O$
    1,34 $ZrO_2$
    1,01 $B_2O_3$
    6,07 ZnO
    0,34 $Sb_2O_3$.

4. Bleifreies Zinksilikat-Kristallglas nach Anspruch 1, **gekennzeichnet durch** folgende Zusammensetzung in Gew.-% auf Oxidbasis
    68,35 $SiO_2$
    6,72 CaO
    7,11 $K_2O$
    9,06 $Na_2O$
    1,34 $TiO_2$
    1,01 $B_2O_3$
    6,07 ZnO
    0,34 $Sb_2O_3$.

5. Verwendung des bleifreien Zinksilikat-Kristallglases nach den Ansprüchen 1 bis 4 zur Herstellung von Haushalts- und Tafelglaswaren.

**Claims**

1. Lead-free zinc silicate crystal glass having a refractive index of $\geq$ 1.52 and a composition, in % by weight based on oxide, of
    65.0-70.0 $SiO_2$
    6.0-9.0 CaO
    4.0-12.0 $K_2O$
    4.0-12.0 $Na_2O$
    0.5-5.0 $B_2O_3$
    4.0-7.0 ZnO
    0.1-1.0 $Sb_2O_3$ and
    1.0-6.0 $ZrO_2$ and/or $TiO_2$

with the proviso that the oxide constituents total 100 % by weight.

7

2. Lead-free zinc silicate crystal glass according to Claim 1, characterized by the following composition, in % by weight based on oxide

    67.0-69.0 $SiO_2$
    6.0-9.0 CaO
    5.0-8.0 $K_2O$
    5.0-8.0 $Na_2O$
    1.5-2.0 $ZrO_2$
    0.5-2.0 $B_2O_3$
    5.0-6.5 ZnO
    0.2-0.7 $Sb_2O_3$ and
    1.0-3.0 $ZrO_2$ and/or $TiO_2$.

3. Lead-free zinc silicate crystal glass according to Claim 1, characterized by the following composition, in % by weight based on oxide

    68.35 $SiO_2$
    6.72 CaO
    7.11 $K_2O$
    9.06 $Na_2O$
    1.34 $ZrO_2$
    1.01 $B_2O_3$
    6.07 ZnO
    0.34 $Sb_2O_3$.

4. Lead-free zinc silicate crystal glass according to Claim 1, characterized by the following composition, in % by weight based on oxide

    68.35 $SiO_2$
    6.72 CaO
    7.11 $K_2O$
    9.06 $Na_2O$
    1.34 $TiO_2$
    1.01 $B_2O_3$
    6.07 ZnO
    0.34 $Sb_2O_3$.

5. Use of the lead-free zinc silicate crystal glass according to Claims 1 to 4 for the production of household and table glassware.

**Revendications**

1. Cristal sans plomb à base de silicate de zinc ayant un indice de réfraction supérieur ou égal à 1,52 et ayant la composition suivante en % par rapport au poids d'oxyde :

    65,0-70,0 $SiO_2$
    6,0-9,0 CaO
    4,0-12,0 $K_2O$
    4,0-12,0 $Na_2O$
    0,5-5,0 $B_2O_3$
    4,0-7,0 ZnO
    0,1-1,0 $Sb_2O_3$ et
    1,0-6,0 $ZrO_2$ et/ou $TiO_2$,
à la condition que la somme des composants sous forme d'oxyde représente 100 % en poids.

2. Cristal sans plomb à base de silicate de zinc selon la revendication 1, caractérisé par la composition suivante en % par rapport au poids d'oxyde :

    67,0-69,0 $SiO_2$
    6,0-9,0 CaO
    5,0-8,0 $K_2O$
    5,0-8,0 $Na_2O$
    1,5-2,0 $ZrO_2$

0,5-2,0 $B_2O_3$
5,0-6,5 ZnO
0,2-0,7 $Sb_2O_3$ et
1,0-3,0 $ZrO_2$ et/ou $TiO_2$.

3. Cristal sans plomb à base de silicate de zinc selon la revendication 1, caractérisé par la composition suivante en % par rapport au poids d'oxyde :
68,35 $SiO_2$
6,72 CaO
7,11 $K_2O$
9,06 $Na_2O$
1,34 $ZrO_2$
1,01 $B_2O_3$
6,07 ZnO
0,34 $Sb_2O_3$.

4. Cristal sans plomb à base de silicate de Zinc selon la revendication 1, caractérisé par la composition suivante en % par rapport au poids d'oxyde :
68,35 $SiO_2$
6,72 CaO
7,11 $K_2O$
9,06 $Na_2O$
1,34 $TiO_2$
1,01 $B_2O_3$
6,07 ZnO
0,34 $Sb_2O_3$.

5. Utilisation de cristal sans plomb à base de silicate de zinc selon l'une des revendications 1 à 4, dans la préparation d'articles en verre pour la table et à usage domestique.